# EUROPEAN PATENT APPLICATION

(11) **EP 1 052 221 A1**
(43) Date of publication of application: **15.11.2000**
(21) Application number: 98955997.6
(22) Date of filing: 01.12.1998
(51) Int. Cl.: C01B 13/11

(54) **OZONE GENERATOR**

(71) Applicant: MITSUBISHI DENKI KABUSHIKI KAISHA, Tokyo 100-8310 (JP)
(72) Inventor: TABATA, Yoichiro, Chiyoda-ku, Tokyo 100-8310 (JP); USUI, Akira, Chiyoda-ku, Tokyo 100-8310 (JP)
(74) Representative: HOFFMANN - EITLE
(86) International application number: PCT/JP98/05387
(87) International publication number: WO 00/32514

(57) **Abstract**

In an ozonizer for producing ozone by supplying an oxygen gas to a discharge between two electrodes which are disposed across a predetermined gap on the two sides of a dielectric sheet, the ozone producing efficiency is improved the better for the narrower gap. However, the heat generation of the electrodes lowers the efficiency, so that a cooling passage 23 has to be disposed in the electrodes to cool them with water. As a result, the electrodes are liable to be deformed by the water pressure or the heat. On the other hand, the dielectric sheet 4 is liable to warp or crack so that an extremely narrow gap cannot be realized.

In the surface of the electrode, there is formed a first recess 600, in which a spacer 601 and gap adjusting sheets 603 are fitted so that the gap can be adjusted according to the number of the gap adjusting sheets.

## Description

### TECHNICAL FIELD

This invention relates to an ozonizer for producing an ozone gas by supplying an oxygen gas to the so-called "dielectric barrier discharge" which is caused on the two sides of a dielectric and, more particularly, to an improvement in a short-gap ozonizer having a discharge gap of 0.5 mm or less.

### BACKGROUND ART

In a device for generating ozone, as known in the prior art, the ozone gas is produced by supplying the oxygen gas to the so-called "dielectric barrier discharge" which is caused on the two sides of the dielectric.

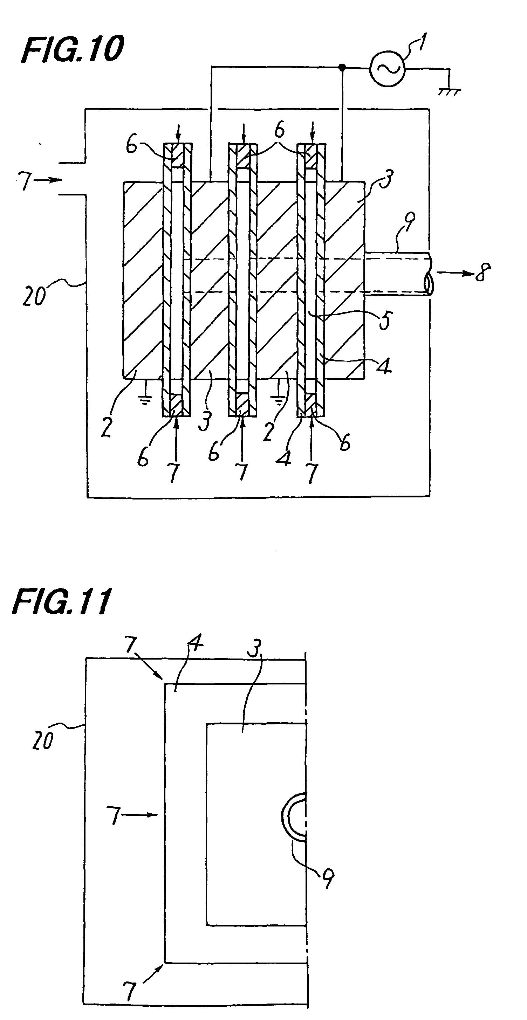

Figs. 10 and 11 are a sectional view and a front elevation (of one half) showing the conventional ozonizer of the Otto plate type, as called so and disclosed on pp. 249 of "OZONIZER HANDBOOK" (edited by Ozonizer Expert Committee of Electric Society and published by CORONA in 1960). As shown, reference numeral 1 designates a discharging power source for generating a high voltage, and its one output is earthed to the ground. Numeral 2 designates an earthed electrode made of a metal; numeral 3 designates a high-voltage electrode disposed to face the earthed electrode 2 and connected with the high-voltage terminal of the power source 1; and numeral 4 designates a dielectric (as exemplified by a glass plate) placed on the surface of the earthed electrode 2 and on the surface of the high-voltage electrode 3. This glass plate 4 is deposited with a metal (although not shown) on its side to contact with the electrode 2 or 3 for the power supply. The dielectric 4 is usually made thin and is called the "dielectric sheet".

Numeral 5 designates a discharging gap (as will be shortly called the "gap") between the electrode 2 or 3 and the dielectric 4, and numeral 6 designates a spacer for forming the discharging gap 5 to keep the two electrodes away from contacting with each other. Numeral 7 designates a supply port for the gas including oxygen; numeral 8 designates an exhaust port for an ozonized gas; numeral 9 designates an exhaust pipe for the same; and numeral 20 designates a casing. In the example of Figs. 10 and 11, the dielectric 4 is used on the two sides of the discharging gap 5. In the following individual Figures, the detailed description of identical or corresponding portions will be omitted by designating them by common reference numerals.

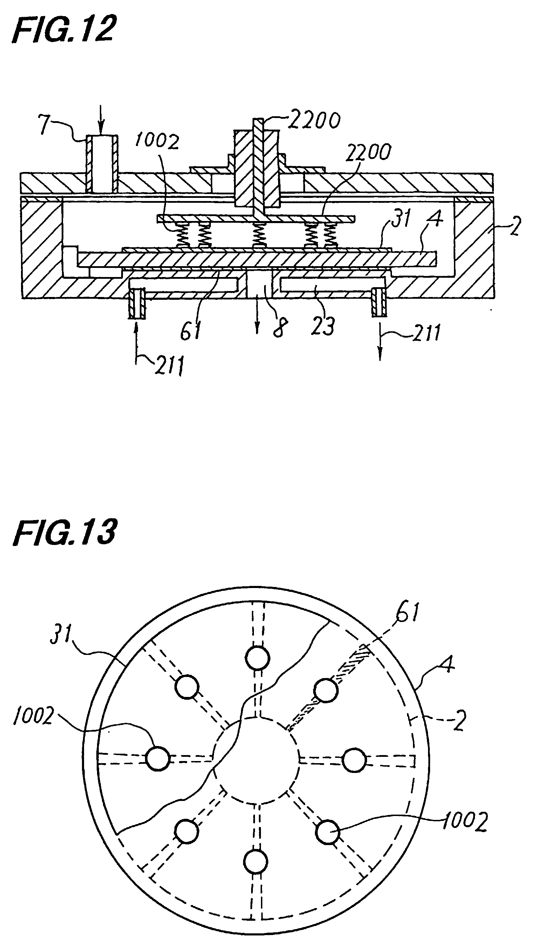

Figs. 12 and 13 show an ozonizer having a small gap (e.g., 0.5 mm or less), as disclosed in Unexamined Published Japanese Patent Application 8-12304, and Fig. 12 presents a sectional view whereas Fig. 13 presents a front elevation of a portion of the earthed electrode 2 and the dielectric 4. As shown, the numeral 2 designates a circular earthed electrode acting as an electrode and a container, and this earthed electrode 2 has a cooling passage 23 therein for allowing cooling water to pass therethrough. Arrows 211 designate the flows of the cooling water. The numeral 4 designates a disc-shaped dielectric made of ceramics, and this dielectric 4 has a conductive film 31 formed on its upper side for supplying the high voltage. On the lower side, there is disposed a radial spacer 61 for forming a radial discharging gap 5 (although not shown) between the dielectric 4 and the earthed electrode 2. A high-voltage terminal 2200 is pushed toward the earthed electrode 2 onto the spacer 61 and the dielectric 4 through an interference spring 1002 thereby to form one discharge cell. In the example shown in Figs. 12 and 13, the dielectric 4 is disposed on only one side of the discharging gap 5, and the earthed electrode 2 has a water-cooled structure.

In the ozonizer of the prior art, an electrode of a conductive film is formed by a depositing or metallizing method or another method on one side of the dielectric 4 so as to bond the earthed electrode 2 and the dielectric 4 closely, as well as the high-voltage electrode 3 and the dielectric 4. On the other hand, the size of the discharging gap 5 is far smaller (e.g., 1 mm or less) than that of the electrodes so that the spacer 6 or 61 having a predetermined thickness is sandwiched at the assembling time so as to hold that gap precisely. A high voltage is applied to establish a discharge between the two electrodes of the discharging gap 5 thus formed, and the oxygen gas is supplied to the discharge. Then, the ozone is produced by the dissociation of oxygen and by the three-body collisions of oxygen atoms and oxygen molecules.

It has been desired to enhance the ozone producing efficiency (i.e., the amount of ozone to be produced for a predetermined making power) to be taken by the discharge. In the prior art, the efficiency is about 20 % at the maximum so that most of the discharge power is consumed by raising the gas temperature and by the heat at the earthed electrode 2 and the high-voltage electrode 3 to heat the same. Here, the ozone producing efficiency depends upon the discharging gas temperature (as seriously influenced by the electrode temperature) so that it is the higher at the lower temperature. Thus, the electrodes 2 and 3 are forcibly cooled with water or the like.

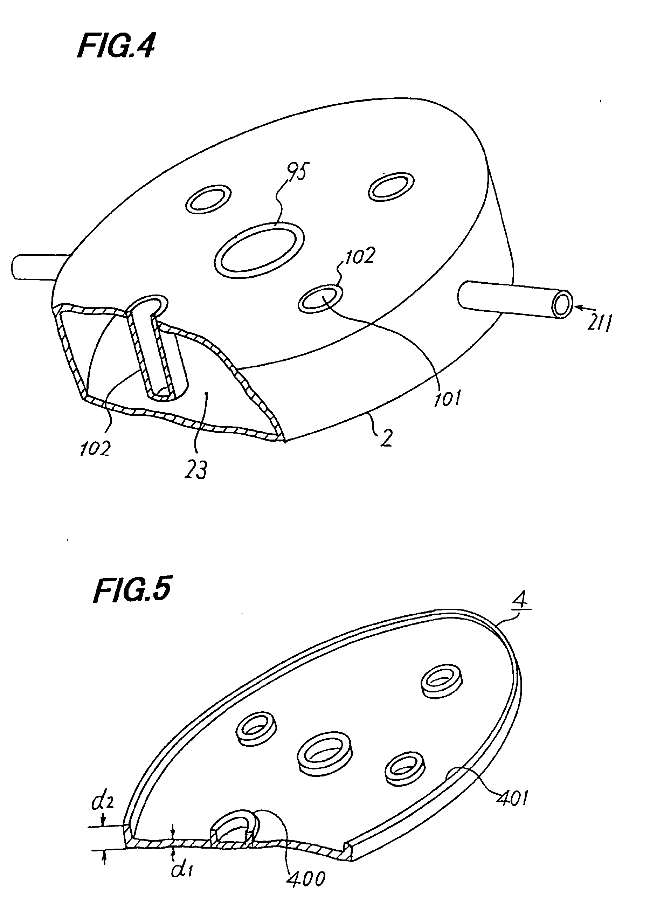

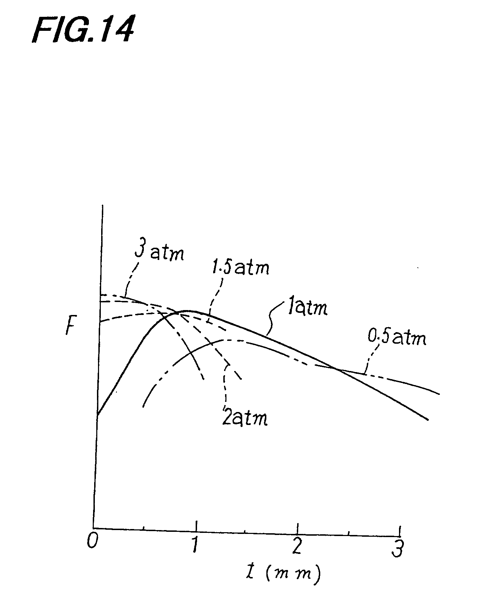

On the other hand, Fig. 14 presents a graph, as disclosed in Fig. 4 of the aforementioned Unexamined Published Japanese Patent Application 8-12304. In this graph, relations between the abscissa / the size t of the discharging gap 5 and the ordinate / the ozone producing efficiency η are illustrated by using a gas pressure to be fed as a parameter. It is seen that the efficiency can be improved the better for the smaller gap if the gas pressure is accordingly raised. Therefore, it has been desired to make the gap as small as possible.

In order to enhance the ozone producing efficiency, as described above, the ozonizer of the prior art has to make the discharging gap smaller. In order to keep the electrodes at a low temperature, on the other hand, it is also necessary to provide the cooling passage 23 for the cooling water in the electrode. If the electrode has such a hollow structure, its surface is slightly deformed by the water pressure. The degree of deformation is fluctuated by the fluctuation in the water pressure. This deformation or its degree raises no serious problem when the gap is large. For the smaller gap, their influences becomes the more serious. It is, therefore, very difficult to make the gap as small as about 0.1 mm.

In the ozonizer of the prior art, as described above, the dielectric sheet 4 having a thickness of about 1 mm is closely bonded to the electrode, and the spacer 7 or 61 for forming the discharging gap 5 is integrated with the dielectric sheet 4 by frame-spraying the ceramics to a portion of the electrode or the dielectric sheet 4. The adjustment of the gap is seriously difficult because the frame-spraying treatment has to be done again or because the frame-sprayed surface has to be scraped.

If the individual discharging gaps are of a size when they are formed in multiple stages by laminating the electrodes, on the other hand, the gas containing oxygen can be supplied at a pressure suited for the gaps so that the overall efficiency is improved. With a dispersion in the gaps, however, the optimum pressure is also dispersed to lower the overall efficiency.

On the other hand, the dielectric sheet 4 is merely sandwiched or adhered between the spacer and the electrode. With a high flatness or warpage of the dielectric sheet 4, therefore, there occurs a problem that the ozone producing efficiency is lowered by an insufficient contact between the dielectric sheet 4 and the electrode or that the dielectric sheet 4 itself cracks in the bonding work.

With the problems thus far described, it is resultantly difficult to enhance the ozone producing efficiency. Since the conventional dielectric sheet is made thin, on the other hand, it takes a polishing work of a long time to manufacture a dielectric sheet which is so accurate as to have a flatness but little warpage. This long-time polishing work leads to a problem to raise the cost highly.

The present invention has an object to provide an ozonizer which can adjust the gap easily with a view to acquiring a narrower gap easily and adjusting the size of the gap uniformly.

This terminology "uniformly" has two meanings that the dispersion in the size in one gap is reduced and that the dispersion in the sizes in the individual gaps is reduced when a plurality of discharge cells are laminated.

Another object is to provide an electrode structure which is hardly deformed by the water pressure or the temperature.

Still another object is to provide a hardly deformed dielectric sheet at a low cost.

### DISCLOSURE OF THE INVENTION

According to this invention, there is provided an ozonizer comprising a pair of flat electrodes arranged to face each other through a gap in which at least one dielectric sheet is inserted, wherein a discharge is established by applying a high voltage between the flat electrodes and wherein a gas containing oxygen is supplied to the gap to produce ozone by the discharge, characterized by comprising: first recesses formed in such a side of either of the paired flat electrodes as faces the gap; and a spacer inserted in the first recesses and protruding from the surface of the electrode.

The spacer inserted in the first recess has a larger thickness than that of the gap. This results in an effect that the spacer can be easily handled and adjusted in its thickness and is freed from coming out at the assembling time.

On the other hand, the spacer may include a gap adjusting sheet for adjusting the protrusion height thereof.

With the gap adjusting sheet, it is enable to easily adjust the thickness of the spacer by extracting/inserting it and by replacing it with another having a different thickness. This results in an effect to facilitate the size adjustment of the gap.

On the other hand, at least one of the first recesses may be formed in the outer side of the outer circumferential edge of the electrode.

The first recess, as formed in the outer side of the outer circumferential edge of the electrode, can provide an effect to prevent the effective area of the electrode from being reduced by the spacer.

On the other hand, there may be comprised an adjusting screw fitted in the first recess, in which the spacer is inserted, for adjusting the protrusion height of the spacer.

This adjusting screw has an effect to facilitate the size adjustment of the gap.

On the other hand, the adjusting screw can adjust from the side face of the electrode.

By this adjusting screw capable of adjusting from the side face of the electrode, the gap can be adjusted without disassembling the ozonizer.

On the other hand, the dielectric sheet may be disposed to contact with the side of either of the two electrodes forming the gap, and a plurality of projections may be formed on the side, as contacting with the electrode, of the dielectric sheet and are fitted in a second recess formed in the electrode with which the one side of the dielectric sheet contacts.

The plurality of projections of the dielectric sheet are fitted in the second recesses to hold the dielectric sheet firmly so that the dielectric sheet is prevented from warping or cracking.

On the other hand, two dielectric sheets may be provided in contact with the individual sides of the two electrodes forming the gap, and at least one of the two dielectric sheets may have a plurality of holes in which the spacer is inserted.

By the holes formed in the dielectric sheet, the spacer is allowed to be inserted without being influenced by the dielectric sheet covering the electrode face, and the discharging gap is completely covered with the dielectric sheet so that metal particles are prevented from migrating into the ozone gas produced by the discharge thereby to improve the purity of the ozone gas.

On the other hand, at least one of the electrodes may have a cooling passage for allowing a coolant to pass therethrough, and a plurality of reinforcing members are extended through the cooling passage for jointing the front and back sides of the electrode.

The plurality of reinforcing members extended through the cooling passage to joint the front and back sides of the electrode are effective to prevent the deformation of the electrode surface, as might otherwise be caused by the water pressure.

On the other hand, the electrode may be made of a cast of aluminum, stainless steel or titanium.

The cast electrode improves the flatness of the electrode surface better.

On the other hand, the dielectric sheet may be a sintered member together with the projections.

The dielectric sheet can be made as the integral sintered member including the projections. As a result, the thermal distortion of the dielectric sheet due to the high temperature at the sintering time can be absorbed by the projections to provide a sheet having a high parallelism and little warpage. Moreover, the time period for shaping the dielectric sheet by the polishing treatment can be drastically shortened to result in a low cost.

### BRIEF DESCRIPTION OF DRAWINGS

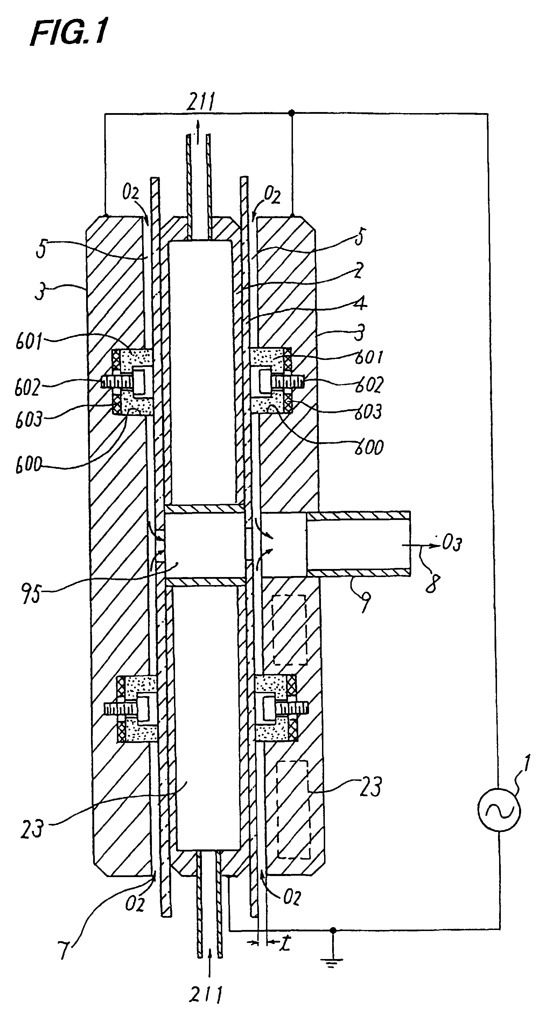

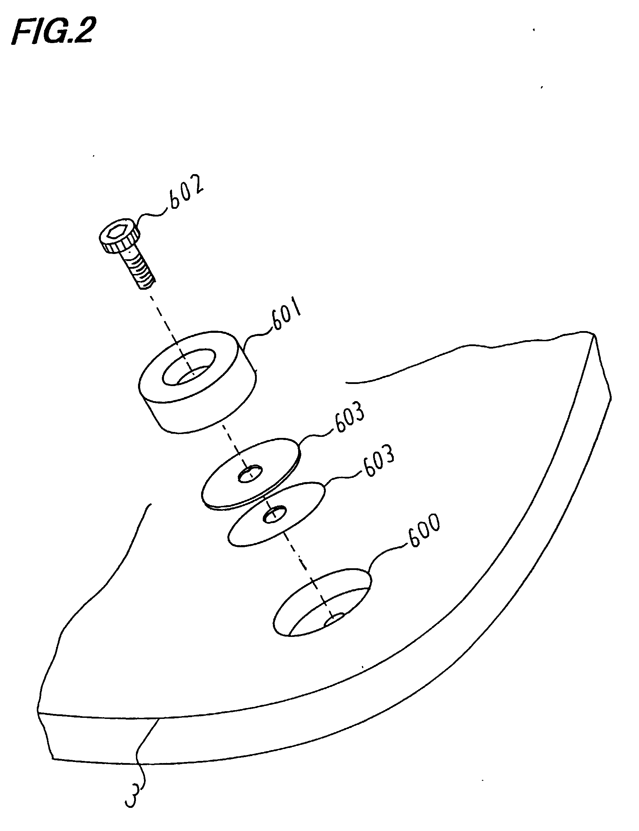

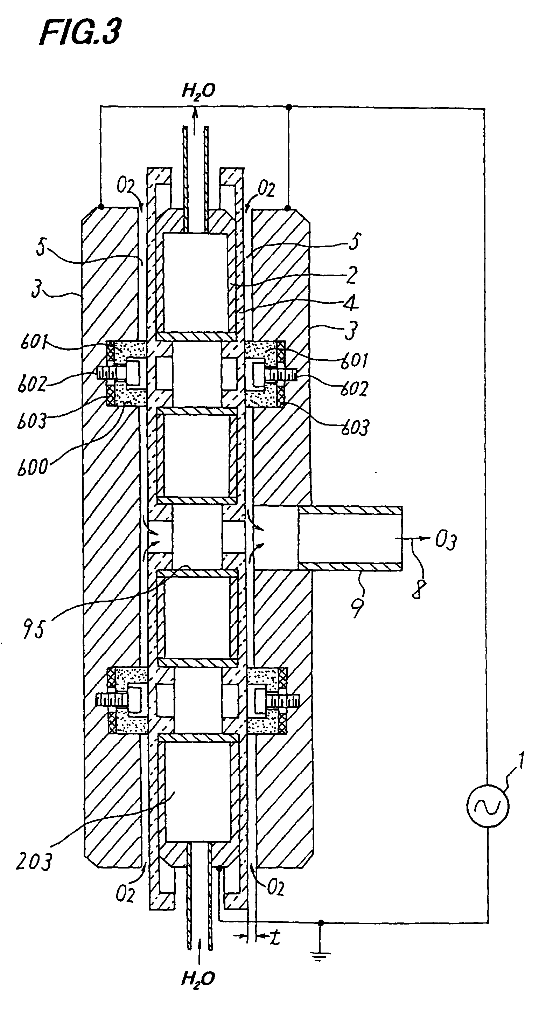

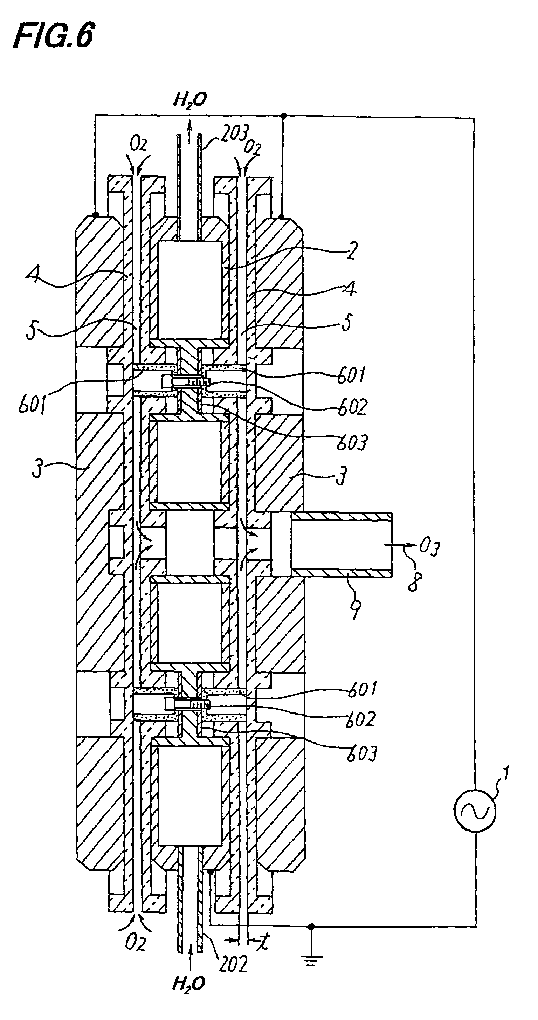

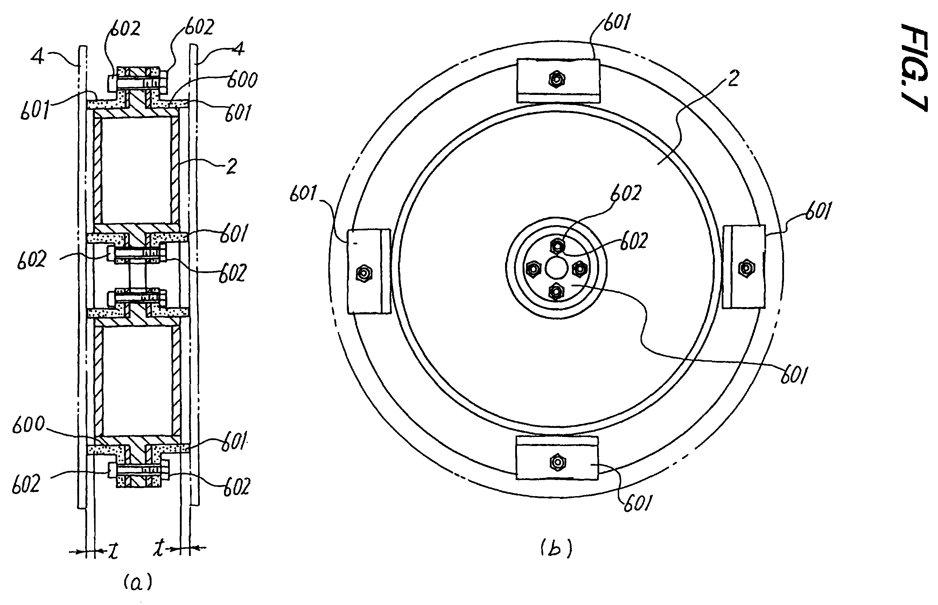

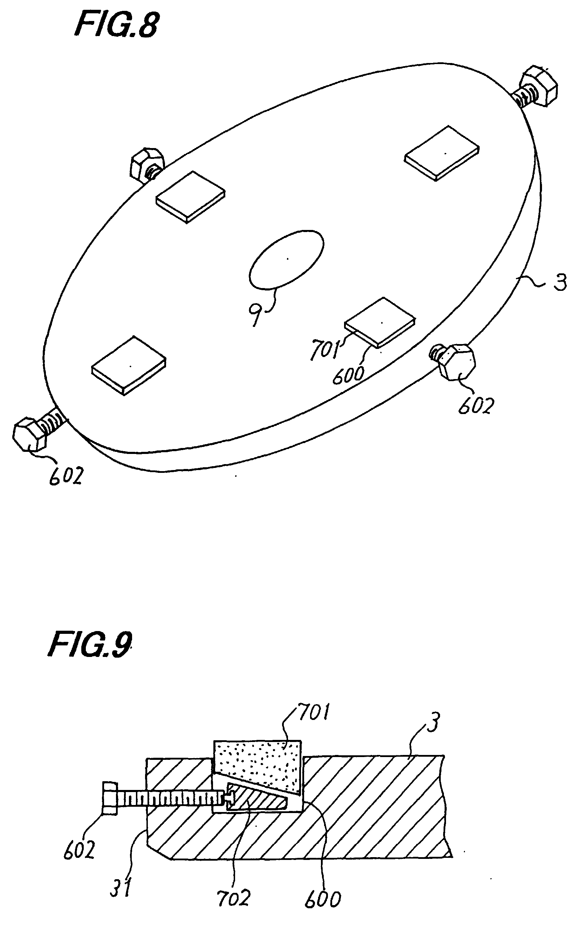

Fig. 1 is a sectional view of an ozonizer of Embodiment 1 of this invention. Fig. 2 is a detailed explanatory view of an essential portion of Fig. 1. Fig. 3 is a sectional view of an ozonizer of Embodiment 2. Fig. 4 is a detailed view of an earthed electrode of Fig. 3. Fig. 5 is a detailed view of a dielectric sheet of Fig. 3. Fig. 6 is a sectional view of an ozonizer of Embodiment 3. Fig. 7 is a sectional view of an essential portion of an ozonizer of Embodiment 4. Fig. 8 is a detailed view of an essential portion of an ozonizer of Embodiment 5, and Fig. 9 is a sectional view of a portion of Fig. 8.
Fig. 10 is a sectional view of the ozonizer of the prior art, and Fig. 11 is a front elevation of Fig. 10. Fig. 12 is a sectional view of the ozonizer of the prior art, and Fig. 13 is a front elevation of a portion of Fig. 12. Fig. 14 is an explanatory view of the characteristics of the ozonizer of Fig. 12.

### BEST MODE FOR CARRYING OUT THE INVENTION

### Embodiment 1

An ozonizer according to Embodiment 1 of this invention will be described with reference to Figs. 1 and 2. Fig. 1 presents a sectional view, and Fig. 2 presents a perspective view of an essential portion of Fig. 1. As in the following other Figures, the detail of a portion of a discharge cell or the ozonizing portion is shown, but the presentation of a casing 20 of the ozonizer will be simplified or omitted. For conveniences of the description, the discharge cell is shown as a single-layered discharge cell in Fig. 1, and two discharging gap portions 5 are shown. The ozonization capacity can be proportionally increased by laminating the discharge cells in multiple layers. Reference numeral 2 designates a plate-shaped earthed electrode having a cooling passage 23 therein, and numeral 3 designates a plate-shaped high-voltage electrode (although the cooling passage 23 is omitted).

Both the earthed electrode 2 and the high-voltage electrode 3 are made of stainless steel into such a disc shape as can be cooled by supplying a coolant such as water thereinto in a direction 211. Numeral 4 designates a disc-shaped dielectric sheet made of a sintered sheet of ceramics such as alumina or a glass sheet. This dielectric sheet 4 is made to have a thickness of about 1 mm.

Numeral 600 designates a circular groove (or a first recess) formed in a side, as facing the discharging gap 5, of the high-voltage electrode 3, and numeral 601 designates a spacer which is fitted in the first recess 600 and has a recess at its center portion. Numeral 602 designates a screw which is inserted into the center recess of the spacer 601 for fixing the spacer 601 in the high-voltage electrode 3. Numeral 603 designates a gap adjusting sheet which is made of a plurality of metal sheets of about 0.01 to 0.05 mm stacked and sandwiched between the high-voltage electrode 3 and the spacer 601. When the electrode is circular, it is advisable to provide at least three first recesses 600. The number of stacked gap adjusting sheets 603 is so adjusted that the spacer 601 may protrude slightly from the surface of the electrode when the screw 602 is fastened. The spacer is held in contact with the dielectric sheet 4 of the earthed electrode 2 to leave the protrusion size as the size (as indicated by t in Fig. 1) of the gap.

Numeral 95 designates a gas passage extending through the cooling passage 23. The dielectric sheet 4 has a hole at a position corresponding to the gas passage 95 to allow the gas to pass therethrough.

Here will be described the operations.

The discharging gap 5 of the discharge cell thus constructed is adjusted by adjusting the height of the spacers 601 highly precisely to 0.1 mm ± 0.01 mm, for example, with the gap adjusting sheets. An oxygen gas is supplied from a gas supply port 7 in the outer circumferential portion of the electrode, and a high AC voltage is applied through the dielectric sheet 4 between the earthed electrode 2 and the high-voltage electrode 3. Then, a dielectric barrier discharge is established in the discharging gap 5 so that the oxygen gas is converted into an ozone gas and extracted from a gas exit 9.

The production efficiency of ozone can be improved not only by shortening the gap length but also by homogenizing the discharge or by lowering the temperature of the gas existing in the discharging portion so that ozone can be produced highly efficiently by the construction of this invention (with a result of ozone in high density).

The depth of the first recess 600 can be easily finished in a higher precision than 0.05 mm by a machining work. If there are prepared gap adjusting sheets 603 of various thicknesses, it is not difficult to adjust the total thickness of the spacer 601 and the gap adjusting sheets 603 accurately to a desired value with respect to the depth of the first recess 600. The depth of the first recess 600 or the thickness of the spacer 601 is so determined that the height of the head of the screw 602 may be lower than the face of the high-voltage electrode 3 when the screw 602 is fastened. Alternatively, the screw 602 is made of an insulator such as ceramics. Then, it is possible to reduce the discharge from the head of the screw 602.

A pressure releasing hole (although not shown) may be formed in the spacer 601 so that the gas, as might otherwise be confined in the spacer 601, may not be raised to a high temperature/pressure by the discharge thereby to cause another problem.

With the construction of Fig. 1, it was possible to set the gap length at 0.1 mm with a precision of ± 0.01 mm or less. The ozone density could be as high as 300 g/Nm, and the power consumption for producing the ozone could be 8 kwh/kg-O₃.

### Embodiment 2

An ozonizer of Embodiment 2 of this invention will be described with reference to Figs. 3, 4 and 5.

Fig. 3 is a sectional view of a discharge cell portion of the ozonizer; Fig. 4 is a perspective view (partially in section) of the earthed electrode 2; and Fig. 5 is a view (partially in section) of the dielectric sheet 2.

The earthed electrode 2 is provided with a plurality of through holes 101 (as will be called the "second recess") extending through its cooling passage 23. Pipe- or rod-shaped reinforcing members 102 are inserted into and soldered or adhered to those through holes 101. By these reinforcing members 102, the front and back sides of the electrode are mechanically bound even in the presence of the cooling passage 23, so that the electrode faces are lightened in their deformations, as might otherwise be caused by the water pressure, and improved in their smoothness. Here, the gas passage 95 and the through holes 101 are shown to be equally sized but need not be equalized in the least.

The earthed electrode 2 of Fig. 4 is enabled to reduce its jointing steps drastically thereby to produce a highly accurate earthed electrode by casting or die-casting it of aluminum, stainless steel or titanium.

In Fig. 5, numeral 400 designates projections formed on the dielectric sheet 4. These projections 400 are given a larger thickness (as indicated by d2) than the thickness (as indicated by d1) of the dielectric sheet 4 and such a diameter as allows them to be snugly fitted in the holes 101 of the earthed electrode 2. With the shape of Fig. 5, the dielectric sheet can be high in flatness and parallelism just after sintered even with no shaping work. What is required as an after-work may be a one-side polish to provide an inexpensive dielectric sheet. The side, as formed by fitting those projections 400 in the holes 101 of Fig. 3, of the surface of the dielectric sheet 4 can have the improved flatness and parallelism. The dielectric sheet 4 also has an increased mechanical strength and makes it possible to enhance the sizing accuracy of the discharging gap 5.

If the outer circumferential portion of the dielectric sheet 4 is provided with a thickened reinforcing edge 401, the smoothness can be better improved to protect the outer circumferential portion of the dielectric sheet 4 when handled, and can contribute to an improvement in the spatial insulation between the electrodes, as shown in Fig. 3.

Here, the projections 400 are shown as the cylindrical shape in Fig. 5 but may be exemplified by solid columns or may have a square section.

### Embodiment 3

An ozonizer of Embodiment 3 of this invention will be described with reference to Fig. 6.

The discharge cell of Fig. 6 is devised to reduce emission of the metal particles which are produced from the electrode surface at the time of producing the ozone by the dielectric barrier discharge, so that the ozonized gas can be produced in high purity. In this Embodiment, the spacer 601 is attached to the side of the earthed electrode 2 but could naturally be attached to the side of the high-voltage electrode 3.

The first recess 600 is formed on the earthed electrode 2 by making use of the holes 101 of Fig. 4 of Embodiment 2. By attaching the dielectric sheet 4 to the two sides of the discharging gap 5, this discharging gap 5 is completely covered with the dielectric sheet 4. The spacer 601 is also made of an inorganic substance such as ceramics, and one dielectric sheet 4 of the discharging gap 5 has a hole for fitting the spacer 601. The discharging gap 5 is wholly covered with the inorganic substance so that the metal particles are not scraped and dispersed by the discharge.

### Embodiment 4

An ozonizer of Embodiment 4 of this invention will be described with reference to Fig. 7. Fig. 7 shows an example in which the spacer 601 is attached to the two sides of the earthed electrode 2. Fig. 7(a) presents a sectional view, and Fig. 7(b) presents a front elevation. In Embodiments 1 to 3, the spacer 601 is attached to the inner side of the discharging gap 5 so that some percentages of the discharge area cannot contribute to the discharge to lower the efficiency. In Fig. 7, therefore, the first recess 600 is formed in the outer side of the outer circumferential edge of the electrode so that the spacer 601 may be attached to the outer side of the discharge side, i.e., to the outer side of the outer circumferential edge of the electrode. As a result, the discharge area is neither reduced, nor is disturbed the gas flow in the discharging gap 5 by the spacer 601, so that the gas flow can be homogenized to stabilize the ozonization thereby to improve the efficiency.

### Embodiment 5

Figs. 8 and 9 show an essential portion of an ozonizer according to Embodiment 5 of this invention. As shown, the first recess 600 is formed into a square shape. Numeral 701 designates a tapered spacer which is fitted in the first recess 600 and formed into a wedge shape, and numeral 702 designates a wedge underlying the tapered spacer 701. To the wedge 702, there is so jointed the screw 602 from the side face 31 of the high-voltage electrode 3 that its leading end rotates freely but does not come out. As the screw 602 is turned in an internal thread formed in the high-voltage electrode 3, the wedge 702 is moved to the right or left, as seen in Fig. 9. As a result, the tapered spacer 701 is pushed upward, as the wedge 702 is moved to the right, and is moved downward (by the earthed electrode 2) as the same is moved to the left. In other words, the size of the discharging gap can be adjusted without disassembling the combination of the electrodes.

The discharging gap 5 can be adjusted while the discharge being observed by applying the voltage, if an insulated tool is used, if the screw 602 is made of the insulator such as ceramics, or the first recess is formed on the side of the earthed electrode 2.

In the Figures of the individual embodiments thus far described, the shapes of the first recess 600 and the spacer 601 should not be limited to the shown ones but may naturally take any shape such as circle, ellipse or square if they can have the function to hold the space. On the other hand, the material for the spacer 601 may preferably be an inorganic insulator but may be exemplified by a metal such as stainless steel but for the case of Fig. 6, in which the metal should not be exposed to the inside of the discharging gap.

### INDUSTRIAL APPLICABILITY

The ozonizer according to this invention can be applied to a wide field including treatments of clean water and sewage, sterilizations of pool water, air cleaners, sterilizations of medical supplies, sterilizations of foods, decolorizations and pulp bleachings.

## Claims

1. An ozonizer comprising a pair of flat electrodes arranged to face each other through a gap in which at least one dielectric sheet is inserted, wherein a discharge is established by applying a high voltage between the flat electrodes and wherein a gas containing oxygen is supplied to said gap to produce ozone by said discharge, characterized by comprising: first recesses formed in such a side of either of said paired flat electrodes as faces said gap; and a spacer inserted in said first recesses and protruding from the surface of said electrode.

2. An ozonizer as set forth in Claim 1, characterized in that said spacer includes a gap adjusting sheet for adjusting the protrusion height thereof.

3. An ozonizer as set forth in Claim 2, characterized in that at least one of the first recesses is formed in the outer side of the outer circumferential edge of said electrode.

4. An ozonizer as set forth in Claim 1, characterized by comprising an adjusting screw fitted in the first recess, in which the spacer is inserted, for adjusting the protrusion height of said spacer.

5. An ozonizer as set forth in Claim 4, characterized: in that the adjusting screw can adjust from the side face of the electrode; and in that the spacer includes a tapered member.

6. An ozonizer as set forth in Claim 1, characterized: in that the dielectric sheet is disposed to contact with the side of either of the two electrodes forming the gap; in that a plurality of projections are formed on the side, as contacting with said electrode, of the dielectric sheet; and in that the projections are fitted in a second recess formed in the electrode with which said one side of the dielectric sheet contacts.

7. An ozonizer as set forth in Claim 1, characterized: in that two dielectric sheets are provided in contact with the individual sides of the two electrodes forming the gap; and in that at least one of the two dielectric sheets has a plurality of holes in which said spacer is inserted.

8. An ozonizer as set forth in Claim 1, characterized: in that at least one of the electrodes has a cooling passage for allowing a coolant to pass therethrough; and in that a plurality of reinforcing members are extended through said cooling passage for jointing the front and back sides of the electrode.

9. An ozonizer as set forth in Claim 8, characterized in that the electrode is cast of aluminum, stainless steel or titanium.

10. An ozonizer as set forth in Claim 6, characterized in that said dielectric sheet is entirely sintered together with the projections.
